# EUROPEAN PATENT APPLICATION

(11) **EP 4 632 569 A1**
(43) Date of publication of application: **15.10.2025**
(21) Application number: 25166646.7
(22) Date of filing: 27.03.2025
(51) Int. Cl.: G06F 9/48, G06F 8/70, G06F 9/50, H04L 41/042, H04L 41/046, H04L 41/0895, H04L 67/10, G06F 8/71, H04L 41/08

(54) **REMOTE EXECUTIONS OF HETEROGENEOUS INFRASTRUCTURE AS CODE RUNTIMES IN A CLOUD ENVIRONMENT**

(30) Priority: 12.04.2024 US 202418634824
(71) Applicant: VMware LLC, Palo Alto, CA 94304 (US)
(72) Inventor: Bobba, Praneeth, 500085 Hyderabad, TG (IN); Devarakonda, Kalyan, 560076 Bangalore, KA (IN); Ganapathi, Prasanna, 560076 Bangalore, KA (IN)
(74) Representative: Grünecker Patent- und Rechtsanwälte PartG mbB

(57) **Abstract**

An example method of managing infrastructure in a cloud includes: receiving, at a remote worker from a cloud automation service, a task to be executed for managing the infrastructure, the remote worker executing in a customer environment that includes the infrastructure, the remote worker having a runtime, the cloud automation service executing external to the customer environment; retrieving, using first credentials obtained by the runtime from the customer environment, source code from a version control system executing in the customer environment; and executing, by the runtime, the source code to manage the infrastructure in the customer environment according to the task.

## Description

### BACKGROUND

Cloud automation tools are configured to simplify and automate the management of cloud environments. The tools can provide a unified platform for managing cloud infrastructure and applications across various cloud environments, including private, public, multi-, and hybrid clouds. Cloud automation tools can support Infrastructure as Code (IaC) practices, allowing teams to manage infrastructure using code-based templates. IaC promotes consistency, repeatability, and scalability in cloud environments.

A vendor of a cloud automation tool can support many customers and not all customers use the same IaC runtime. There are multiple different types of IaC runtimes, each having multiple stable versions that can be in use. Installing and configuring IaC runtimes of all types and versions into the cloud automation tool is impractical and not maintainable. Further, many customers source IaC scripts from version control systems. Customer can deploy version control systems on corporate networks, making them unavailable for a cloud automation tool executing as a cloud service. In addition, a cloud automation tool executing as a cloud service may require read-only access for monitoring a customer's public cloud deployment and read-write access for ensuring/restoring compliance. This requires the customer to provide credentials to the cloud automation tool, which is often unacceptable for the customer. For a multi-customer cloud automation tool, the risk of the cloud service compromising the credentials of a potentially large set of customers becomes a significant risk factor in customer audit and security profiling/threat modeling. Thus, there is a need for a cloud automation tool that supports various types and versions of IaC runtimes, that accommodates various deployments of version control systems, and that avoids the need for customer credentials to leave their environments.

### SUMMARY

In an embodiment, a method of managing infrastructure in a cloud is described. The method includes receiving a task to be executed for managing the infrastructure at a remote worker from a cloud automation service. The remote worker executes in a customer environment that includes the infrastructure. The remote worker includes a runtime. The cloud automation service executes external to the customer environment. The method includes retrieving, using first credentials obtained by the runtime from the customer environment, source code from a version control system executing in the customer environment. The method includes executing, by the runtime, the source code to manage the infrastructure in the customer environment according to the task.

Further embodiments include a non-transitory computer-readable storage medium comprising instructions that cause a computer system to carry out the above method, as well as a computer system configured to carry out the above method.

### BRIEF DESCRIPTION OF THE DRAWINGS

Fig. 1 is a block diagram depicting a computing system according to embodiments.
Fig. 2 is a block diagram depicting a data center according to embodiments.
Fig. 3 is a block diagram depicting logical relation between cloud automation service and remote workers according to embodiments.
Fig. 4 is a flow diagram depicting a method of registering a remote worker with cloud automation service according to embodiments.
Fig. 5 is a flow diagram depicting a method of executing a task by a cloud automation service according to embodiments.
Fig. 6 is a block diagram of a task according to embodiments.
Fig. 7 is a flow diagram depicting a method of executing a task at a remote worker according to embodiments.

### DETAILED DESCRIPTION

Remote executions of heterogeneous Infrastructure-as-Code (IaC) runtimes in a cloud environment are described. In embodiments, a technique for managing infrastructure in a cloud system is performed by a cloud automation service in cooperation with a remote worker. The cloud automation service executes external to a customer environment, such as in a cloud, data center, or the like. The remote worker executes in the customer environment, such as in a cloud, data center, or the like. The infrastructure being managed (e.g., deployed, configured, updated, etc.) comprises virtual resources and software executing in the customer environment, such as within a subscription of a public cloud. In embodiments, a customer (either directly or through software) provides a task for managing the infrastructure to the cloud automation service. In embodiments, the customer subscribes to the cloud automation service, which is external to their environment, using a Software-as-a-Service (SaaS) model. The customer also starts one or more remote workers as part of a remote worker group within the customer environment. The remote workers are registered with the cloud automation service. The remote workers are configured with, or can otherwise obtain access to, customer secrets, such as credentials. The cloud automation service does not access the customer secrets known by the remote worker or otherwise obtain the customer secrets through the remote worker. The remote worker executes an IaC runtime selected by the customer. The cloud automation service is agnostic to the type and version of the IaC runtime used in the remote workers. The remote worker executes a task delegated by the cloud automation service. The IaC runtime in the remote worker executes the task by downloading source code from a version control system in the customer environment (e.g., in the private cloud). A version control system may be any software that manages changes to source code over time. Source code can be code written in a programming language, such as an IaC programming language. The IaC runtime executes the source code to manage the infrastructure. These and variations of these embodiments are described below with respect to the drawings.

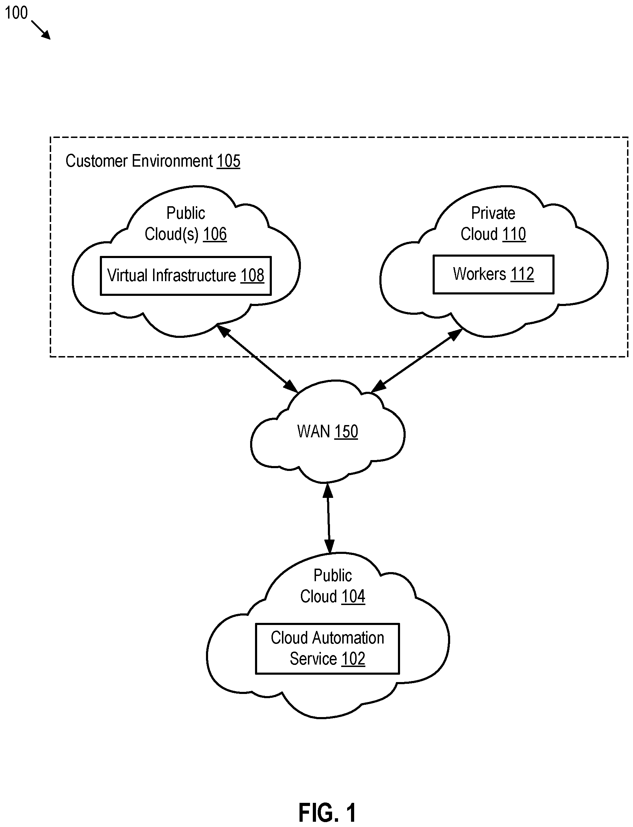

Fig. 1 is a block diagram depicting a computing system 100 according to some embodiments. Computing system 100 includes a customer environment 105 and a public cloud 104 in which executes a cloud automation service 102. Customer environment 105 comprises infrastructure operated by a user referred to herein as a customer. Infrastructure can be physical infrastructure, such as computers, storage devices, network devices, and the like. Infrastructure can be virtualized portions of physical infrastructure (virtual infrastructure), such as virtual machines (VMs), containers, software-defined networks (SDNs), software-defined storage, and the like. Software can execute on infrastructure (e.g., a host of physical infrastructure or a VM/container of virtual infrastructure).

In some embodiments, customer environment 105 comprises a private cloud 110 and subscriptions to one or more public clouds 106. Private cloud 110 can be, for example, infrastructure exclusively dedicated to the customer. Public cloud 106 can be, for example, infrastructure that serves multiple users, and each public cloud 106 may be operated by a third party. The customer can obtain a subscription to public cloud 106, which is a right to use some portion of the infrastructure of public cloud 106. Some portions of infrastructure of a customer's subscription in public cloud 106 may be dedicated to the customer (e.g., a VM), while other portions of such infrastructure may be shared among multiple users having subscriptions to public cloud 106 (e.g., physical infrastructure, such as a host). Customer environment 105 can be referred to as a hybrid cloud, which includes infrastructure form both private and public clouds. Customer environment 105 can comprise one or more clouds, each of which can be designated based on their type (e.g., private cloud, public cloud), as first cloud, second cloud, and so on, or as a combination of type and number (e.g., first public cloud, second public cloud, and so on).

In some embodiments, cloud automation service 102 can be software provided by a user referred to herein as a vendor. The customer can obtain a subscription to cloud automation service 102 from the vendor. In embodiments, cloud automation service 102 is provided as a Software-as-a-Service (SaaS) product. SaaS is a cloud computing model in which software is delivered over a network, such as the Internet. Cloud automation service 102 can be dedicated to the customer or shared by multiple users including the customer. Public cloud 104 can be operated by the vendor or cloud automation service 102 can execute within a subscription from a third-party operator of public cloud 104. Customer environment 105 and public cloud 104 are connected to a wide area network (WAN) 150, such as the Internet. In embodiments, cloud automation service 102 is external to customer environment 105. That is, cloud automation service 102 executes on infrastructure that is not part of customer environment 105.

In some embodiments, cloud automation service 102 automates provisioning and management of computing resources in customer environment 105. This allows the customer to manage cloud resources spanning multiple clouds from a single platform of cloud automation service 102. Cloud automation service 102 supports Infrastructure-as-Code (IaC), which enables the customer to manage and provision infrastructure in customer environment 105 through code rather than manual processes. IaC enhances consistency, repeatability, and speed in deploying and managing infrastructure resources. In embodiments, the customer uses cloud automation service 102 to manage virtual infrastructure 108 in public cloud(s) 106. Virtual infrastructure 108 is deployed within the confines of the customer's subscription within public cloud(s) 106.

The customer develops the code used by an IaC runtime to deploy its infrastructure 108. A runtime can be software that executes code written in a programming language. An IaC runtime can be software that executes code written in a programming language having semantics used for managing virtual infrastructure (an "IaC" programming language). As described further herein, the IaC runtime is responsible for executing code, which controls the IaC runtime to interact with customer environment 105 to manage virtual infrastructure 108. The customer also selects a type and version of the IaC runtime as a development target for the code. The customer can select multiple IaC runtimes, which can span types and/or versions. For example, one business unit (BU) of the customer can use one type of IaC runtime and another BU of the customer can use another type of IaC runtime. As described further below, the code used to manage virtual infrastructure 108 can be under version-control using a version control system (VCS). The customer obtains or generates credentials to authorize and authenticate users and software for access to version control systems, public cloud(s) 106, and private cloud 110. These credentials may comprise confidential data or "secrets" of the customer. A VCS may be any software that manages changes to source code made over time. Examples include GIT, Subversion (SVN), and MERCURIAL.

In embodiments, cloud automation service 102 is agnostic to the type and version of IaC runtime(s) selected by customer. Further, cloud automation service 102 operates without the need to obtain credentials or other secrets of the customer used to access resources to deploy virtual infrastructure 108. This is achieved using workers 112 deployed in customer environment 105. In embodiments, workers 112 of cloud automation service 102 are software executing in private cloud 110 of customer environment 105. As described further below, the customer configures workers 112 to use selected IaC(s). The customer configures workers 112 with the necessary secrets to obtain access to the resources needed to deploy virtual infrastructure 108. Cloud automation service 102 leverages workers 112 to perform its function of managing virtual infrastructure 108. Since workers execute remote from cloud automation service 102 (e.g., not in public cloud 104 as part of cloud automation service 102), such workers 112 are also referred to herein as "remote workers."

Computing system 100 is capable of variation from the embodiment shown. While customer environment 105 is shown as a hybrid cloud, other types of cloud systems can be used with cloud automation service. For example, customer environment 105 can include only public cloud(s) 106 or only private cloud(s) 110. While workers 112 are shown as executing in private cloud 110, workers can also execute within the customer's subscription in a public cloud 106.

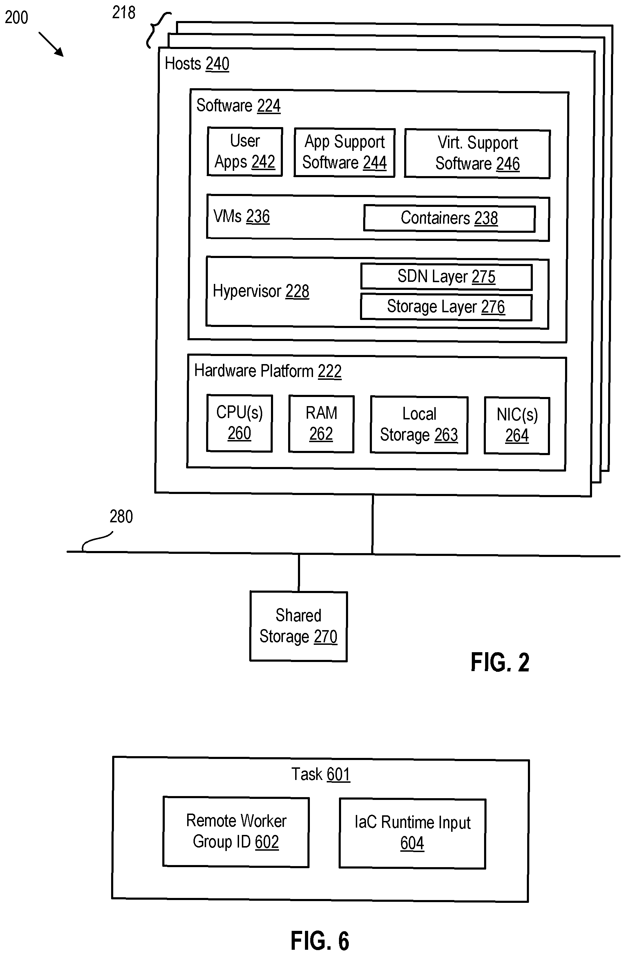

Fig. 2 is a block diagram depicting a data center 200 according to embodiments. One or more data centers 200 or variants thereof can implement each cloud in computing system 100 of Fig. 1. Data center 200 includes a cluster of hosts 240 ("host cluster 218"). Host 240 can be a physical computer having a hardware platform such as an x86 platform or an ARM platform. For purposes of clarity, only one host cluster 218 is shown. However, data center 200 can include many of such host clusters 218. In the example shown, a hardware platform 222 of each host 240 includes conventional components of a computing device, such as one or more central processing units (CPUs) 260, system memory (e.g., random access memory (RAM) 262), one or more network interface controllers (NICs) 264, and optionally local storage 263. CPUs 260 are configured to execute instructions, for example, executable instructions that perform one or more operations described herein, which may be stored in RAM 262. NICs 264 enable host 240 to communicate with other devices through a physical network 280. Physical network 280 enables communication between hosts 240 and between other components and hosts 240.

In the embodiment, hosts 240 access shared storage 270 by using NICs 264 to connect to network 280. In another embodiment, each host 240 contains a host bus adapter (HBA) through which input/output operations (IOs) are sent to shared storage 270 over a separate network (e.g., a fibre channel (FC) network). Shared storage 270 include one or more storage arrays, such as a storage area network (SAN), network attached storage (NAS), or the like. Shared storage 270 may comprise magnetic disks, solid-state disks, flash memory, and the like as well as combinations thereof. In some embodiments, hosts 240 include local storage 263 (e.g., hard disk drives, solid-state drives, etc.). Local storage 263 in each host 240 can be aggregated and provisioned as part of a virtual SAN, which is another form of shared storage 270.

Software 224 of each host 240 provides a virtualization layer, referred to herein as a hypervisor 228, which directly executes on hardware platform 222. In an embodiment, there is no intervening software, such as a host operating system (OS), between hypervisor 228 and hardware platform 222. Thus, hypervisor 228 is a Type-1 hypervisor (also known as a "bare-metal" hypervisor). As a result, the virtualization layer in host cluster 218 (collectively hypervisors 228) can be a bare-metal virtualization layer executing directly on host hardware platforms. Hypervisor 228 abstracts processor, memory, storage, and network resources of hardware platform 222 to provide a virtual machine execution space within which multiple VMs 236 may be concurrently instantiated and executed. Software executes in VMs 236 either directly on guest operating systems of VMs 236 or using containers 238. Containers 238 implement operating system-level virtualization, where an abstraction layer is provided on top of a guest operating system of a VM 236. While the embodiment shows containers executing in VMs 236, some hypervisors support the execution of containers outside of a virtual machine environment. In another embodiment, a host in data center 200 can include a host operating system executing directly on its hardware platform without virtualization (e.g., without hypervisor 228). In such case, containers can execute on the host operating system outside of a virtual machine context.

Hypervisor 228 includes SDN layer 275 and storage layer 276. SDN layer 275 virtualizes physical network 280 and NICs 264 to implement SDNs. SDN layer 275 includes distributed software (across hypervisors 228), such as distributed switches, distributed routers, and the like. SDN layer 275 can cooperate with software executing in VMs 236, such as network control planes, service routers, and the like to implement SDNs. Storage layer 276 functions similar to SDN layer 275, but with respect to virtualization of storage, including local storage 263 across hosts 240 and shared storage 270.

Software executing in VMs 236 (within containers or directly on guest operating systems) may include user applications 242, application support software 244, and virtualization support software 246. Virtualization support software 246 includes software that supports virtualization of resources in data center 200, such as virtualization management servers, network management servers, container orchestration servers (e.g., KUBERNETES or the like), and the like. Application support software 244 includes software that supports user applications 242, such as databases, load balancers, network gateways, and the like. User applications 242 comprise business applications, services, and the like.

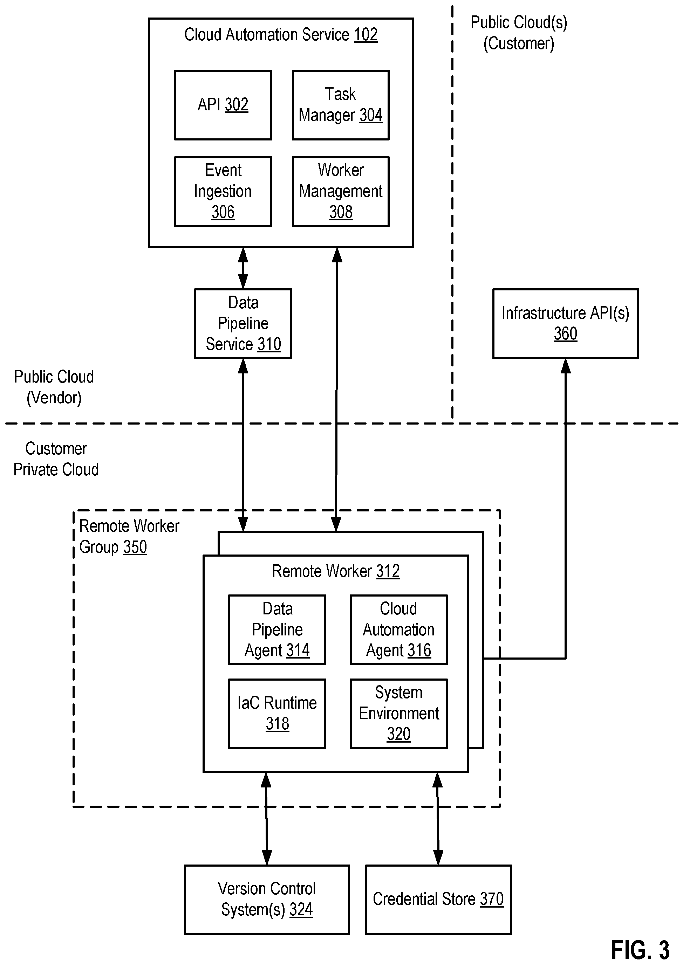

Fig. 3 is a block diagram depicting logical relation between cloud automation service 102 and remote workers according to embodiments. Consistent with the embodiment of Fig. 1, cloud automation service 102 executes in a public cloud operated by or subscribed to by the vendor. Remote workers of cloud automation service 102 execute in the customer's environment, such as in the customer's private cloud. A remote worker can be software executing in the customer's environment.

In the embodiment, workers 112 shown in Fig. 1 comprise a remote worker group 350. Remote worker group 350 is a logical construct of cloud automation service 102. Remote worker group 350 includes one or more remote workers 312. While a remote worker 312 is associated with a remote worker group 350, the knowledge of remote worker group 350 can be unknown to the customer's private cloud. As discussed below, a remote worker 312 when running in the customer's environment may have as its configuration an IaC type, IaC version, a remote worker group ID, tokens for communicating with clouds, and the like. While one remote worker group 350 is shown in the embodiment, the customer can interact with cloud automation service 102 to define multiple remote worker groups 350. Further, remote workers 312 that are part of the same remote worker group need not be co-located in the same cloud or data center. Remote worker group 350 is shown to logically group remote workers 312 and it is to be understood that remote worker group 350 could include other remote workers in different location(s) (not shown). A customer can use remote worker group 350 to scale out the number of remote workers and logically associate a group of identical remote workers for execution of tasks submitted to cloud automation service 102.

In some embodiments, cloud automation service 102 includes a collection of services and/or functionalities, including an application programming interface (API) 302, a task manager 304, event ingestion 306, and worker management 308. Cloud automation service 102 cooperates with data pipeline service 310. Each remote worker 312 includes a data pipeline agent 314, a cloud automation agent 316, an IaC runtime 318, and a system environment 320. Each remote worker 312 interacts with one or more version control systems 324 executing in the customer's environment. Further, each remote worker 312 interacts with one or more infrastructure APIs 360 of public cloud(s) in which the customer has subscription(s) to manage virtual infrastructure. An agent may be any software that performs functions on behalf of a service with which the agent cooperates.

The customer can interface with cloud automation service 102 through API 302. The customer can directly interface with API 302. Alternatively, software executing on behalf of the customer can interface with API 302. Cloud automation service 102 includes multiple communication channels to remote worker group 350, including a communication channel through data pipeline service. Data pipeline service 310 comprises a secure data pipeline that provides high-throughput, low-latency data delivery and control channel communication between cloud automation service 102 and remote worker groups. Data pipeline service 310 provides high-throughput, low-latency data delivery and control channel communication between private cloud, public cloud, and cloud services. The data pipeline includes two components: a client that operates as a broker to collect and forward information gathered from various service interface adaptors, and a cloud-resident receiver that also acts as a broadcast service for subscribers of the various data streams. Data pipeline service 310 is constructed as a non-blocking scale-out architecture and exposes fully supported public APIs for pub/sub use cases. Data pipeline service 310 (cloud-resident receiver) cooperates with an agent (client) executing in each remote worker 312, shown as data pipeline agent 314. Cloud automation service 102 can also include a channel external to data pipeline service 310 used for registration of remote workers, as discussed below.

In embodiments, cloud automation service 102 cooperates with an agent executing in each remote worker 312 to deliver tasks for execution. A task can be some unit of work to be done within the context of virtual infrastructure. Cloud automation agent 316 supplies input to IaC runtime 318 to execute tasks. IaC runtime 318 obtains code and/or data for task execution from version control system(s) 324. System environment 320 of remote worker 312 can be configured with secrets required to perform the tasks, such as credentials for accessing version control systems 324 and credentials for access infrastructure APIs 360. Credentials can include various types of data used for authentication and/or authorization, including usernames, passwords, cryptographic data, tokens, and the like.

In embodiments, each remote worker 312 executes in VM(s) and/or container(s) (generally referred to as a virtual computing instance, which comprises at least one VM, at least one container, or a combination of at least one VM and at least one container). Data pipeline agent 314, cloud automation agent 316, and IaC runtime 318 comprise software executing in the execution environment of the VM(s) or container(s). System environment 320 comprises environment variables or the like within the execution environment of the VM(s) or container(s). The environment variables can store data used by the remote worker 312, including credentials as discussed above. In other embodiments, remote worker 312 can obtain secrets from an external source (not shown) rather than being configured with such secrets internally. Version control system(s) 324 executes in VM(s) or container(s).

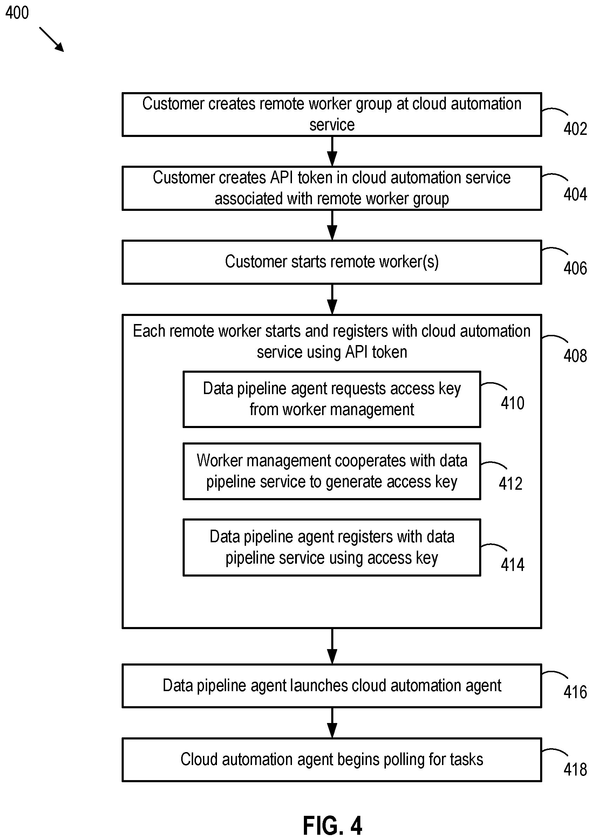

Fig. 4 is a flow diagram depicting a method 400 of registering a remote worker with cloud automation service according to embodiments. Steps of method 400 comprise initial configurations also referred to as "day 0" and "day 1" activities. For purposes of clarity by example, the embodiments are described with respect to customer actions, but it is to be understood that software executing on behalf of the customer can perform such actions. Method 400 begins at step 402, where the customer creates remote worker group 350 via interaction with cloud automation service 102. The customer creates remote worker group 350 by giving the group an identifier. Remote worker group 350 is a logical construct created to identify a set of homogenous remote workers 312. A remote worker group entity can be created within the customer's environment and within cloud automation service 102 to encapsulate information describing remote worker group 350, such as IaC type, IaC version, org identity, and the like.

At step 404, the customer creates an API token in cloud automation service 102 associated with remote worker group 350. The API token can allow each remote worker 312 to authenticate to cloud automation service 102 during registration, as described below. API token can be any type of data capable of authentication and/or authorization. At step 406, the customer starts remote worker(s) 312. Consider an example where remote workers 312 execute in containers supported by the DOCKER container runtime. Each remote worker 312 can include system environment 320 having customer secrets, such as credentials as discussed above. For example, in some embodiments, the customer can execute the following command (depicted in pseudo code for the sake of illustration) to start a remote worker 312:
docker run -it --name remote-worker \
   - e WORKER_NAME="user_worker_name" \
   - e WORKER_GROUP_ID="user_worker_group_id" \
   - e ARIA_HUB_URL="aria_hub_url" \
   - e API_TOKEN="api_token" \
   - e ACCESS_KEY_ID="user_access_key_id" \
   - e SECRET_ACCESS_KEY="user_secret_access_key" \
   - e IAM_ASSUME_ROLE_NAME="user_iam_assume_role_name" \
   - e PERSONAL_TOKEN="user_git_personal_token" \
iac-remote-worker

In the example, WORKER_NAME identifies the remote worker and WORKER_GROUP_ID identifies the remote worker group. The variable ARIA_HUB_URL includes a uniform resource locator (URL) for accessing cloud automation service 102. The variables ACCESS_KEY_ID and SECRET_ACCESS_KEY include credential information for accessing the customer's subscription in a public cloud. The variable PERSONAL_TOKEN includes credentials for accessing a version control system. The variable API_TOKEN includes an API token associated with the remote worker group used when registering remote workers with cloud automation service 102. This is just one example of starting a remote worker as a container that includes environment variables with customer credential information. Any number of additional or different parameters and/or variables can be supplied. As described above, other embodiments include remote workers that obtain secrets while executing (rather than being preconfigured with the secrets) and remote workers that execute in VMs rather than containers. For example, a remote worker 312 can integrate with a credential store 370 for resolving credentials of a customer's public and/or private infrastructure layers.

If infrastructure layers support more variants of authentication, the "keys" in the parametric input above for the command to start a remote worker can be augmented or updated. The start command can also include keys related to credential store(s) for obtaining credentials during runtime. Further, there can be multiple credentials for a given infrastructure service (e.g., business unit 1 has one set of credentials, business unit 2 has another set of credentials, etc. for the same infrastructure service). In such case, the start command for a remote worker can include a manifest file that includes the details of all credentials across various business units or other units within an organization, which can be encrypted and stored securely.

At step 408, each remote worker 312 starts and registers itself with cloud automation service 102 using an API token for remote worker group 350. For example, at step 410, data pipeline agent 314 requests an access key from worker management 308. Data pipeline agent authenticates with worker management 308 using the API token for remote worker group 350. At step 412, worker management 308 cooperated with data pipeline service 310 to generate an access key. At step 414, data pipeline agent 314 registers with data pipeline service 310 using the access key obtained from worker management 308.

At step 416, data pipeline agent 314 launches cloud automation agent 316. At this point, remote worker 312 is registered with cloud automation service 102 and capable of communication over the data pipeline implemented by data pipeline service 310. At step 418, cloud automation agent 316 begins polling for tasks from cloud automation service 102. Cloud automation agent 316 can start a polling operation that checks with data pipeline agent 314 for incoming data that includes tasks to execute.

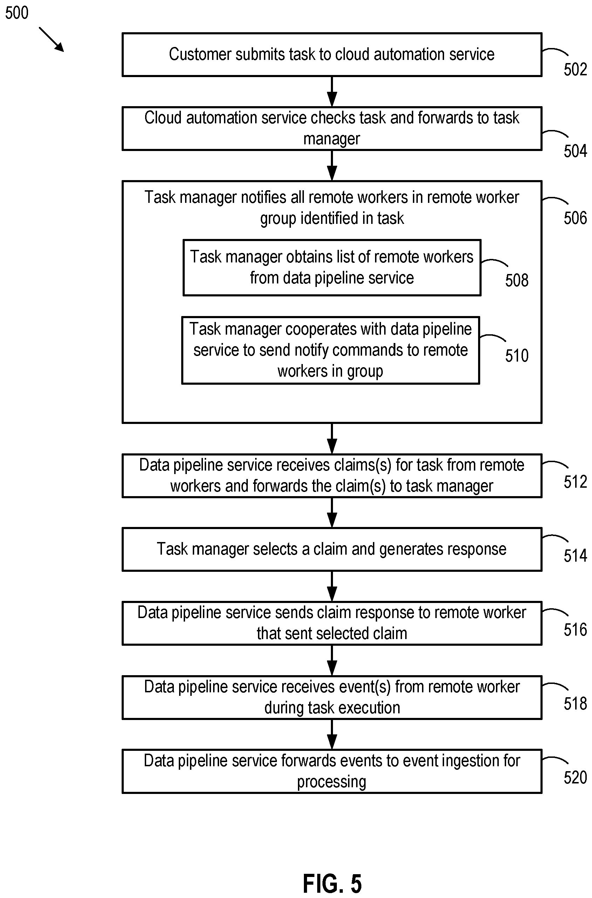

Fig. 5 is a flow diagram depicting a method 500 of executing a task by cloud automation service 102 according to embodiments. For purposes of clarity by example, the embodiments are described with respect to customer actions, but it is to be understood that software executing on behalf of the customer can perform such actions. Method 500 begins at step 502, where the customer submits a task to cloud automation service 102. Fig. 6 is a block diagram of a task 601 according to embodiments. Task 601 includes a remote worker group ID 602 and an IaC runtime input 604. Remote worker group ID 602 identifies to which remote worker group the task is to be sent. IaC runtime input 604 comprises input to IaC runtime 318 for execution of the task. There can be multiple attributes of IaC runtime input 604, including IaC type, IaC version, and any other IaC specific attributes depending on the type/version of the IaC runtime. IaC runtime input 604 can indicate the source code to be obtained from one or more version control systems. Source code can be code written in a programming language, such as an IaC programming language.

Returning to Fig. 5, at step 504, cloud automation service 102 checks the task for validity (e.g., sanity check, checking validity of the request format, etc.) and forwards the task to task manager 304. At step 506, task manager 304 notifies all remote workers 312 in remote worker group 350 identified in the task. For example, at step 508, task manager 304 obtains a list of remote workers 312 in the identifier remote worker group 350 from data pipeline service 310 (such remote workers 312 having been registered with data pipeline service 310 as in Fig. 4). At step 510, task manager 304 cooperates with data pipeline service 310 to send notify commands to remote workers 312 in remote worker group 350. The notify commands function to notify remote workers 312 of a task to be performed.

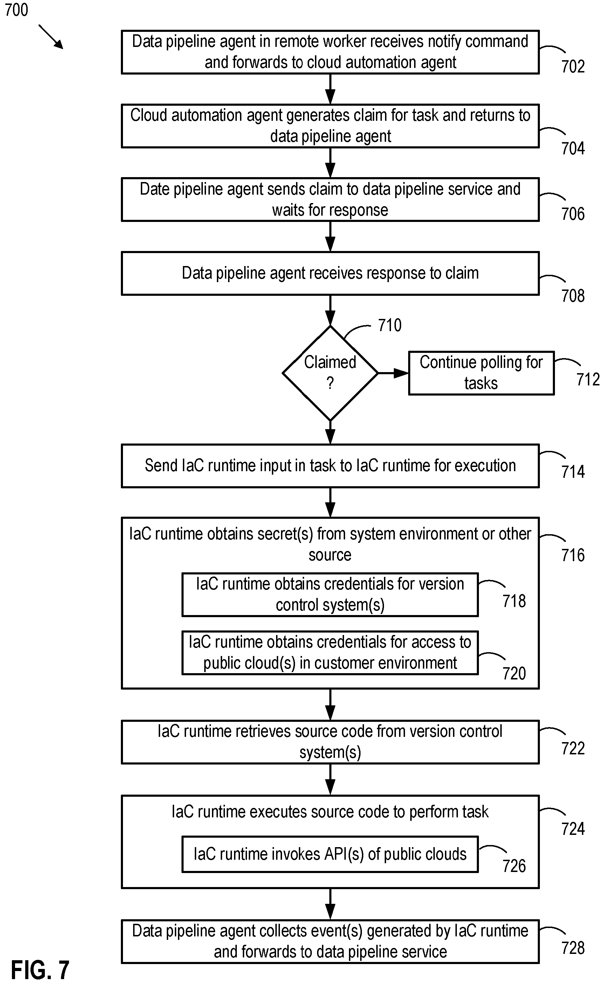

At step 512, data pipeline service 310 receives claim(s) for the task from remote worker(s) 312 and forwards the claim(s) to task manager 304. The process of making claims for a task is discussed below with respect to Fig. 7. At step 514, task manager 304 selects a claim and generates a claim response for the selected remote worker 312. At step 516, data pipeline service 310 sends the claim response to the selected remote worker 312 (i.e., the remote worker that issued the selected claim). At step 518, data pipeline service 310 receives event(s) from remote worker 312 during the task execution. The process of generating events is discussed below with respect to Fig. 7. At step 520, data pipeline service 310 forwards the events to event ingestion 306 of cloud automation service 102. Event ingestion 306 comprises an event processor, such as RABBITMQ, KAFKA, or the like.

Fig. 7 is a flow diagram depicting a method 700 of executing a task at a remote worker according to embodiments. Method 700 begins at step 702, where data pipeline agent 314 in remote worker 312 receives a notify command from cloud automation service 102 that a task is available for remote worker group 350. Data pipeline agent 314 forwards the notify command to cloud automation agent 316. At step 704, cloud automation agent 316 generates a claim to accept the task and returns the claim to data pipeline agent 314. At step 706, data pipeline agent 314 sends the claim to data pipeline service 310 and waits for a response.

At step 708, data pipeline agent 314 receives a claim response from data pipeline service 310. Data pipeline agent 314 forwards the claim response to cloud automation agent 316. At step 710, claim automation agent 316 determines whether the claim has been accepted by cloud automation service 102. If not, method 700 proceeds to step 712, where cloud automation agent 316 continues polling for tasks. If at step 710 the claim to the task has been accepted, method 700 proceeds to step 714.

At step 714, cloud automation agent 316 sends runtime input 604 in the task to IaC runtime 318 for execution. At step 716, IaC runtime 318 obtains secret(s) from system environment 320 or from any other source (in alternative embodiments discussed above). For example, at step 718, IaC runtime 318 obtains credentials for version control system(s) 324. At step 720, IaC runtime 318 obtains credentials to access public cloud(s) in the customer environment.

At step 722, IaC runtime 318 retrieves source code from version control system(s) 324. IaC runtime 318 retrieves the source code to perform the task given the IaC runtime input 604. That is, IaC runtime input 604 identifies which source code is required to perform the given task. At step 724, IaC runtime 318 executes the source code to perform the task. For example, at step 726, IaC runtime 318 invokes infrastructure API(s) 360 of public clouds in the customer environment to provision or manage infrastructure. IaC runtime 318 can invoke infrastructure API(s) 360 by sending commands, such as API commands. At step 728, data pipeline agent 314 collects event(s) generated by IaC runtime 318 during execution of the task and forwards the event(s) to data pipeline service 310.

Remote executions of heterogeneous Infrastructure-as-Code (IaC) runtimes in a cloud environment have been described. A customer can use a cloud automation service to ensure compliant and cost-effective infrastructure deployments across public and private clouds. Execution of IaC tasks is handled by IaC runtimes. The cloud automation service can include all components necessary for its function of managing infrastructure in the customer environment, including the IaC runtimes. However, not all customers use the same IaC runtime. There are multiple types of IaC runtimes, each type having multiple stable versions used in practice. Further, customers can maintain IaC source code in version control systems(s) executing in the customer environment. Such version control systems are typically, by customer desire and design, inaccessible from external to the customer environment (e.g., inaccessible by the cloud automation service). Even if accessible, the version control systems require one or more sets of credentials, typically maintained as secrets within the customer environment. In addition to version control system credentials, the customer maintains credentials for accessing their public cloud subscriptions to manage infrastructure therein. If the cloud automation service includes the IaC runtime, then the customer must supply these secrets to the cloud automation service and keep them synchronized.

To solve the aforementioned problems, in embodiments, the functionality of the cloud automation service is distributed. An IaC agnostic portion of the cloud automation service executes external to the customer environment. The IaC runtimes execute in remote workers within the customer environment. The customer manages the deployment of the remote workers and can select the types and versions of the IaC runtimes. In addition, the customer can augment the IaC runtimes with proprietary libraries that are otherwise unavailable in public repositories. Further, the remote workers are configured with the necessary credentials or are configured to access the necessary credentials from within the customer environment. In embodiments, these credentials are not exposed to the cloud automation service executing external to the customer environment.

As discussed above, managing cloud environments can be a complex technical problem. Virtual infrastructure in a cloud, for example, can include many different entities (e.g., VMs, containers, SDNs, software-defined storage, etc.) each having varied configuration options and connections to other entities. A user managing such virtual infrastructure can make use of a cloud automation service. Further, the user can make use of IaC allowing management of the virtual infrastructure using code-based templates. The use of IaC tools engender further technical problems given that there are many different types of versions of such tools and given that such tools need access to user secrets to perform their functions. Embodiments described above provide a technical solution to such technical problems by distributing the functionality of cloud automation between a centralized service external to the customer environment and remote workers within the customer environment. The customer configures IaC functionality in the remote workers and the centralized service is agnostic to the particular type/version of such IaC functionality. The centralized service need not support many different IaC types/versions, reducing its size and complexity. Customer secrets, including credentials, are accessible by the remote workers, but can be shielded from the centralized service. Again, the complexity of the centralized service is reduced since it need not manage security of customer secrets, potentially across many customers.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Certain embodiments as described above involve a hardware abstraction layer on top of a host computer. The hardware abstraction layer allows multiple contexts to share the hardware resource. These contexts can be isolated from each other, each having at least a user application running therein. The hardware abstraction layer thus provides benefits of resource isolation and allocation among the contexts. Virtual machines may be used as an example for the contexts and hypervisors may be used as an example for the hardware abstraction layer. In general, each virtual machine includes a guest operating system in which at least one application runs. It should be noted that these embodiments may also apply to other examples of contexts, such as containers. Containers implement operating system-level virtualization, wherein an abstraction layer is provided on top of a kernel of an operating system on a host computer or a kernel of a guest operating system of a VM. The abstraction layer supports multiple containers each including an application and its dependencies. Each container runs as an isolated process in userspace on the underlying operating system and shares the kernel with other containers. The container relies on the kernel's functionality to make use of resource isolation (CPU, memory, block I/O, network, etc.) and separate namespaces and to completely isolate the application's view of the operating environments. By using containers, resources can be isolated, services restricted, and processes provisioned to have a private view of the operating system with their own process ID space, file system structure, and network interfaces. Multiple containers can share the same kernel, but each container can be constrained to only use a defined amount of resources such as CPU, memory and I/O. In some cases, if and where relevant, "virtualized computing instance" can encompass both VMs and containers.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary in some embodiments, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A method of managing infrastructure in a cloud, comprising:
receiving, at a remote worker from a cloud automation service, a task to be executed for managing the infrastructure, the remote worker executing in a customer environment that includes the infrastructure, the remote worker having a runtime, the cloud automation service executing external to the customer environment;
retrieving, using first credentials obtained by the runtime from the customer environment, source code from a version control system executing in the customer environment; and
executing, by the runtime, the source code to manage the infrastructure in the customer environment according to the task.

2. The method of claim 1, wherein the cloud automation service executes in a first public cloud external to the customer environment, wherein the customer environment comprises a private cloud, and wherein the remote worker executes in the private cloud,
in particular,
wherein the infrastructure is in a second public cloud in which a subscription thereto is part of the customer environment,
in particular,
wherein the step of executing comprises:
invoking, using second credentials obtained by the runtime, an application programming interface (API) of the second public cloud to manage the infrastructure.

3. The method of claims 1 or 2, wherein the remote worker executes in a virtual computing instance comprising at least one virtual machine (VM), at least one container, or a combination of at least one VM and at least one container, and wherein the runtime obtains the first credentials from a system environment of the virtual computing instance.

4. The method of one of the previous claims, further comprising:
generating a remote worker group and an application programming interface (API) token;
starting the remote worker as part of the remote worker group;
registering, using the API token, the remote worker with the cloud automation service; and
launching, by the remote worker, a cloud automation agent that executes as an agent of the cloud automation service.

5. The method of claim 4, wherein the remote worker is started by supplying the API token and the first credentials as input.

6. The method of one of the previous claims, wherein the cloud automation service communicates with a data pipeline service executing external to the customer environment, wherein the remote worker includes a data pipeline agent that executes as an agent of the data pipeline service, and wherein the cloud automation service sends the task to the remote worker through cooperation of the data pipeline service and the data pipeline agent.

7. The method of one of the previous claim, wherein the task includes an identifier for a remote worker group having the remote worker and input for the runtime,
in particular,
wherein the input for the runtime indicates the source code to be retrieved from the version control system.

8. A non-transitory computer readable medium comprising instructions to be executed in a computing device to cause the computing device to carry out a method of managing infrastructure in a cloud, comprising:
receiving, at a remote worker from a cloud automation service, a task to be executed for managing the infrastructure, the remote worker executing in a customer environment, the remote worker having a runtime, the cloud automation service executing external to the customer environment;
retrieving, using first credentials obtained by the runtime from the customer environment, source code from a version control system executing in the customer environment; and
executing, by the runtime, the source code to manage the infrastructure in the customer environment according to the task.

9. The non-transitory computer readable medium of claim 8, wherein the cloud automation service executes in a first public cloud external to the customer environment, wherein the customer environment comprises a private cloud, wherein the remote worker executes in the private cloud, wherein the infrastructure is in a second public cloud in which a subscription thereto is part of the customer environment, and wherein the step of executing comprises invoking, using second credentials obtained by the runtime, an application programming interface (API) of the second public cloud to manage the infrastructure,
and/or
wherein the remote worker executes in a virtual computing instance comprising at least one virtual machine (VM), at least one container, or a combination of at least one VM and at least one container, and wherein the runtime obtains the first credentials from a system environment of the virtual computing instance.

10. The non-transitory computer readable medium of claims 8 or 9, wherein the cloud automation service communicates with a data pipeline service executing external to the customer environment, wherein the remote worker includes a data pipeline agent that executes as an agent of the data pipeline service, and wherein the cloud automation service sends the task to the remote worker through cooperation of the data pipeline service and the data pipeline agent,
and/or
wherein the task includes an identifier for a remote worker group having the remote worker and input for the runtime, and wherein the input for the runtime indicates the source code to be retrieved from the version control system.

11. A computing system, comprising:
a hardware platform; and
software executing on the hardware platform, the software including a remote worker in a customer environment, the remote worker operable to:
cooperate with a cloud automation service external to the customer environment to receive a task to be executed for managing infrastructure in a cloud, the customer environment including the infrastructure;
retrieve, by a runtime of the remote worker, source code from a version control system of the customer environment using first credentials from the customer environment; and
execute, by the runtime, the source code to manage the infrastructure in the customer environment according to the task.

12. The computing system of claim 11, wherein the cloud automation service executes in a first public cloud external to the customer environment, wherein the customer environment comprises a private cloud, and wherein the hardware platform is in the private cloud.

13. The computing system of claims 11 or 12, wherein the remote worker executes in a virtual computing instance comprising at least one virtual machine (VM), at least one container, or a combination of at least one VM and at least one container, and wherein the runtime is operable to obtain the first credentials from a system environment of the virtual computing instance.

14. The computing system of one of claims 11 to 13, wherein the cloud automation service is operable to communicate with a data pipeline service executing external to the customer environment, wherein the remote worker includes a data pipeline agent that executes as an agent of the data pipeline service, and wherein the remote worker is operable to receive the task from the cloud automation service through cooperation of the data pipeline service and the data pipeline agent.

15. The computing system of one of claims 11 to 14, wherein the task includes an identifier for a remote worker group having the remote worker and input for the runtime, and wherein the input for the runtime includes indicates the source code to be retrieved from the version control system.
